# FASCICULE DE BREVET EUROPEEN

(11) **EP 4 032 677 B1**
(45) Date de publication et mention de la délivrance du brevet: **19.11.2025**
(21) Numéro de dépôt: 22151392.2
(22) Date de dépôt: 13.01.2022
(51) Int. Cl.: B29C 39/38, B29C 39/12, B29C 65/00

(54) **ELÉMENT DE GARNITURE DE VÉHICULE**
FAHRZEUGVERKLEIDUNGSELEMENT
TRIM ELEMENT FOR A VEHICLE

(30) Priorité: 13.01.2021 FR 2100303
(43) Date de publication de la demande: 27.07.2022
(73) Titulaire: Adler Pelzer France Grand-Est, 08210 Mouzon (FR)
(72) Inventeur: JEUNESSE, Steve, 08210 MOUZON (FR); NICAISE, Florine, 08000 CHARLEVILLE-MEZIERES (FR); LIAUD, Didier, 08140 POURU ST REMY (FR)
(74) Mandataire: Lavoix

(56) Documents cités:
- EP-A1- 3 354 453
- EP-A2- 2 087 166
- EP-B1- 2 087 166
- EP-B1- 3 354 453
- FR-A1- 2 155 798
- FR-A1- 3 035 834
- US-A1- 2004 001 934
- US-A1- 2020 171 993

## Description

La présente invention concerne un élément de garniture de véhicule, notamment de véhicule automobile, et un procédé de fabrication d'un tel élément de garniture.

On connait déjà, dans l'état de la technique, des éléments de garniture de véhicule réalisés en un mélange de fibres de polypropylène et de fibres de verre (également appelé Sommold). De tels éléments de garniture présentent de très bonnes caractéristiques mécaniques, mais présentent également quelques inconvénients liés à la présence de fibres de verre. Plus particulièrement, les fibres de verres peuvent former des bords coupants et/ou des lignes blanches nuisant à l'esthétique de l'élément de garniture. En outre, un mélange de fibres de polypropylène et de fibres de verre est habituellement difficile à recycler. Un élément de garniture de véhicule automobile utilisant des fibres de polypropylène est divulgué par le document FR 2155798 A1.

La présente invention a notamment pour but de proposer une alternative au Sommold, remédiant aux inconvénients précités, tout en présentant des caractéristiques mécaniques satisfaisantes.

A cet effet, l'invention a notamment pour objet un élément de garniture de véhicule, notamment de véhicule automobile, comprenant :
- une première couche structurelle formée d'un mélange de premières fibres de Polytéréphtalate d'éthylène liées entre elles par un liant en copolymère de polyéthylène, et
- une seconde couche de parement intégralement formée de secondes fibres de Polytéréphtalate d'éthylène,
caractérisé en ce qu'une partie des secondes fibres de la seconde couche s'étendent dans la première couche et sont liées avec les premières fibres de la première couche par le liant en copolymère de polyéthylène.

L'élément de garniture selon l'invention est intégralement formé de polymères recyclables, plus particulièrement de fibres de Polytéréphtalate d'éthylène (dans les deux couches), et de liant en copolymère de polyéthylène.

La liaison entre les deux couches est réalisée de manière originale, permettant de manière surprenante une liaison présentant une tenue mécanique satisfaisante.

L'élément de garniture selon l'invention présente donc de bonnes caractéristiques mécaniques malgré l'absence de fibres de verre, tout en ne présentant aucun inconvénient habituellement lié à la présence de telles fibres de verre. En particulier, l'élément de garniture étant formé de fibres de PET et de coPET uniquement, il présente une très bonne recyclabilité.

Un élément de garniture selon l'invention peut présenter en outre l'une ou plusieurs des caractéristiques suivantes, prises seules ou selon toutes combinaisons techniquement envisageables :
- L'élément de garniture comprend un renfort noyé dans la première couche, le renfort étant choisi parmi : des fibres continues de Polytéréphtalate d'éthylène, liées entre elles par un liant en copolymère de polyéthylène, des fibres continues de Polytéréphtalate d'éthylène, liées entre elles sans liant, et un film de Polytéréphtalate d'éthylène.
- L'élément de garniture comprend une troisième couche, par exemple une mousse de Polytéréphtalate d'éthylène, solidarisée à la première couche, par exemple par collage.
- L'élément de garniture forme une tablette de plage arrière de véhicule automobile.
- Les secondes fibres sont liées entre elles par aiguilletage.

L'invention concerne également un procédé de fabrication de l'élément de garniture tel que défini précédemment, comprenant :
- la fourniture d'une nappe destinée à former la première couche, la nappe étant formée d'un mélange de premières fibres de Polytéréphtalate d'éthylène et de fibres de liaison au moins partiellement en copolymère de polyéthylène,
- la fourniture de la seconde couche formée des secondes fibres pré-aiguilletées,
- la superposition de la nappe avec la seconde couche,
- l'aiguilletage de la nappe et de la seconde couche ensemble, l'aiguilletage étant réalisé à travers la seconde couche, de la seconde couche vers la nappe, avec une profondeur d'aiguilletage supérieure à l'épaisseur de la seconde couche, de sorte qu'une partie des secondes fibres pénètre la nappe,
- le chauffage de la nappe et de la seconde couche jusqu'à au moins la température de fusion du copolymère de polyéthylène,
- le refroidissement au cours duquel le copolymère de polyéthylène refroidit et durcit, formant un liant pour les premières fibres et pour la partie des secondes fibres qui ont pénétré la nappe.

Un procédé de fabrication selon l'invention peut présenter en outre l'une ou plusieurs des caractéristiques suivantes, prises seules ou selon toutes combinaisons techniquement envisageables :
- Les fibres de liaison sont chacune formée d'une âme de Polytéréphtalate d'éthylène entourée d'une gaine de copolymère de polyéthylène.
- La nappe est formée d'un mélange comportant entre 30 et 60% en masse de fibres de liaison et entre 40 et 70% en masse de premières fibres.
- Le chauffage est réalisé par soufflage d'un air chaud à travers la nappe et la seconde couche.
- Un renfort est intégré dans la nappe lors de la fourniture de cette nappe.

L'invention concerne également un procédé de fabrication de l'élément de garniture tel que défini précédemment.

Différents aspects et avantages de l'invention seront mis en lumière dans la description qui va suivre, donnée uniquement à titre d'exemple non limitatif et faite en se référant aux figures annexées, parmi lesquelles :
[Fig 1] La figure 1 est une vue schématique en coupe d'un élément de garniture selon un premier exemple de mode de réalisation de l'invention ;

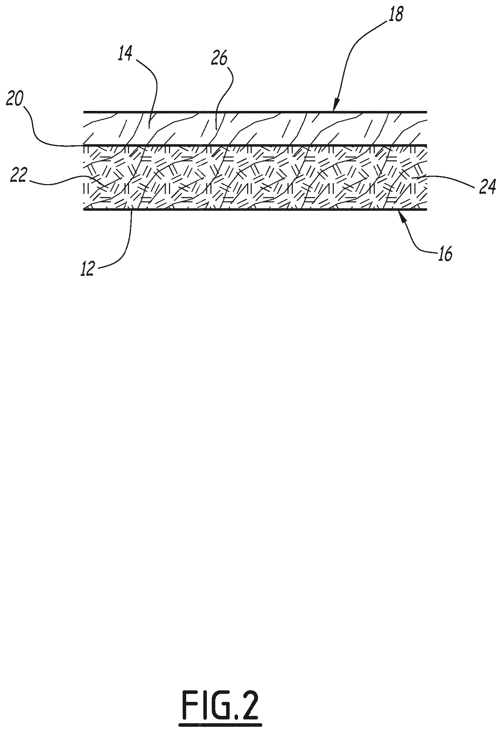

[Fig 2] La figure 2 est un détail de la figure 1 ;
[Fig 3] La figure 3 est une vue schématique en coupe d'un élément de garniture selon un deuxième exemple de mode de réalisation de l'invention ;
[Fig 4] La figure 4 est une vue schématique en coupe d'un élément de garniture selon un quatrième exemple de mode de réalisation de l'invention.

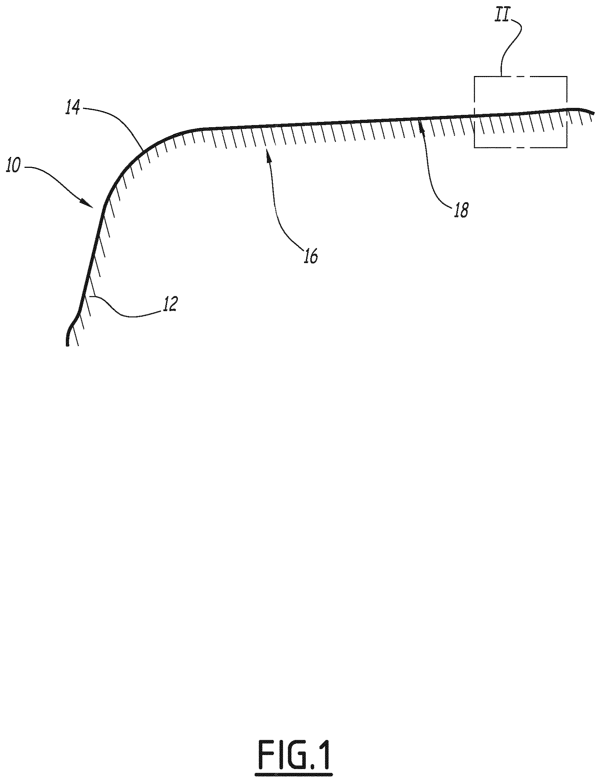

On a représenté schématiquement, sur la figure 1, un élément de garniture 10, destiné à équiper un véhicule, notamment un véhicule automobile.

L'élément de garniture 10 forme par exemple une tablette de plage arrière de véhicule automobile. On notera que l'invention peut s'appliquer de manière équivalent à tout autre élément de garniture de véhicule.

L'élément de garniture 10 présente une première face 12 et une seconde face 14 opposée à la première face 12. Par exemple, la seconde face 14 est une face extérieure, destinée à être visible par un utilisateur, et la première face 12 est une face intérieure, généralement masquée pour l'utilisateur.

L'élément de garniture 10 comprend une première couche 16 et une seconde couche 18. La première couche 16 s'étend en épaisseur entre la première face 12 et une interface 20 avec la seconde couche. La seconde couche s'étend en épaisseur entre l'interface 20 et la seconde face 14.

La première couche 16 est une couche structurelle formée d'un mélange de premières fibres 22 de Polytéréphtalate d'éthylène (PET) liées entre elles par un liant 24 en copolymère de polyéthylène (coPET).

La seconde couche 18 est une couche de parement intégralement formée de secondes fibres 26 de Polytéréphtalate d'éthylène (PET). Les secondes fibres 26 sont par exemple liées entre elles par aiguilletage. Par « couche de parement », on entend que c'est cette seconde couche 18 qui est principalement destinée à être visible par un utilisateur.

Conformément à l'invention, une partie des secondes fibres 26 de la seconde couche 18 s'étendent dans la première couche 16 et sont liées avec les premières fibres 22 de la première couche 16 par le liant 24 en coPET.

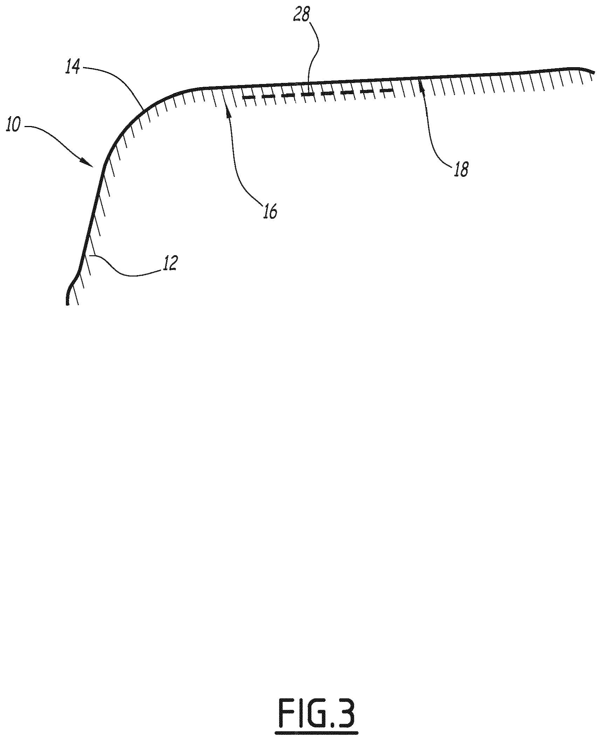

On notera que, conformément à un deuxième mode de réalisation représenté sur la figure 3, la première couche 16 inclut un renfort 28.

Par exemple, le renfort 28 est intégré à la première couche à l'aide d'un procédé similaire à celui décrit dans FR3 051 711.

Ce renfort 28 est par exemple formé de fibres continues en PET, notamment de longueur supérieure à 20 cm. Ces fibres continues sont par exemple liées par un liant en coPET.

En variante, le renfort 28 est formé par un film de PET.

Conformément à une autre variante, le renfort 28 est formé par une poudre.

Le renfort 28 adhère à la première couche 16 au moyen du liant 24.

La présence d'un tel renfort 28 permet d'améliorer significativement les propriétés mécaniques de l'élément de garniture 10, au prix d'une légère augmentation de masse.

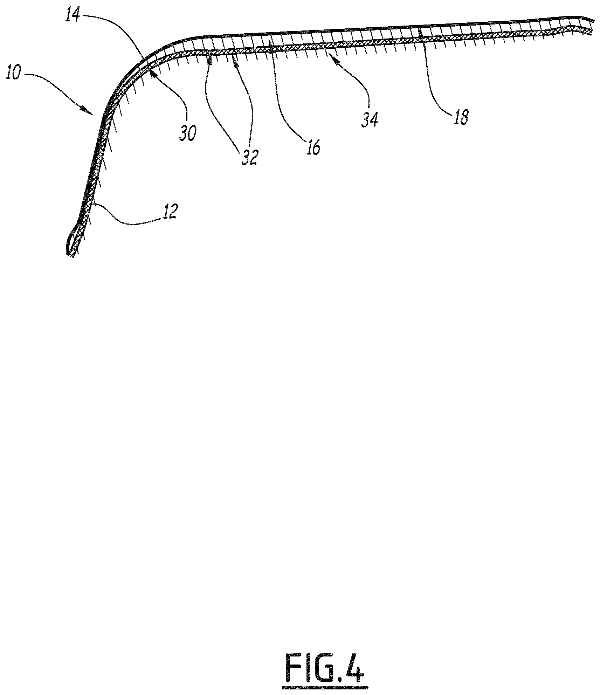

Conformément à un troisième mode de réalisation, représenté sur la figure 4, l'élément de garniture 10 comporte au moins une troisième couche 30 assemblée à la première coucher 16.

La troisième couche 30 est par exemple formée par une mousse de PET.

Cette troisième couche 30 est par exemple solidarisée à la première face 12 par collage, au moyen d'une couche de colle 32.

De manière optionnelle, la troisième couche 30 forme un écarteur entre la première couche 16 et une quatrième couche 34, également collée à la troisième couche 30 par une couche de colle 32.

Un procédé de fabrication de l'élément de garniture 10 va maintenant être décrit.

Le procédé de fabrication comporte une première étape de préparation de la première couche 16, sous la forme d'une nappe.

A cet effet, on effectue un mélange des première fibres premières fibres 22 de Polytéréphtalate d'éthylène (PET) avec des fibres de liaison, au moins partiellement en copolymère de polyéthylène (coPET).

Avantageusement, les fibres de liaison sont de type « bicomposant », et sont formées d'une âme en PET entourée d'une gaine en coPET. En variante, les fibres de liaison sont intégralement en coPET.

De préférence, les fibres de liaison présentent un titre inférieur au titre des premières fibres 22. Par exemple, les fibres de liaison présentent un titre d'environ 4 dTex, et les premières fibres un titre d'environ 11 dTex.

De préférence, le mélange comporte entre 30 et 60% en masse de fibres de liaison et entre 40 et 70% en masse de premières fibres 22. Par exemple, le mélange comporte 50% de fibres de liaison et 50% de premières fibres 22.

Les fibres mélangées sont ensuite nappées et cardées de manière classique afin d'obtenir la nappe précitée.

Le procédé de fabrication comporte par ailleurs une seconde étape de préparation de la seconde couche 18.

Cette seconde couche 18 est formée des secondes fibres 26 pré-aiguilletées. Ces secondes fibres 26 aiguilletées sont ainsi enchevêtrées entre elles de manière classique, pour donner une cohérence structurelle à la seconde couche 18.

Le procédé de fabrication comporte ensuite troisième une étape de superposition de la nappe avec la seconde couche 18.

Suite à cette étape de superposition, le procédé de fabrication comporte une quatrième étape d'aiguilletage de la nappe et de la seconde couche 18 ensemble. L'aiguilletage est réalisé à travers la seconde couche 18, de la seconde couche 18 vers la nappe, avec une profondeur d'aiguilletage supérieure à l'épaisseur de la seconde couche 18.

Ainsi, une partie des secondes fibres 26 de la seconde couche 18 est entrainée dans la nappe, et y est enchevêtrée avec les premières fibres 22 et les fibres de liaison. La nappe et la seconde couche 18 sont ainsi reliées en un ensemble.

Le procédé de fabrication comporte ensuite une cinquième étape de chauffage dudit ensemble jusqu'à au moins la température de fusion du coPET des fibres de liaison. On rappellera que le point de fusion du coPET (environ 110 à 120°C) est plus bas que le point de fusion du PET (environ 250°C), si bien que le coPET peut fondre sans altérer les fibres de PET, notamment les premières fibres 22, les secondes fibres 26, ainsi que les âmes des fibres de liaison.

Dans le cas où l'on souhaite un bon comportement au fluage à hautes températures (notamment des températures supérieures à 90°C), on choisira un coPET haute température, dont le point de fusion est par exemple compris entre 175 et 185°C. Ce point de fusion reste toutefois inférieur à celui du PET. Cela est par exemple le cas lorsque l'élément de garniture est destiné à être soumis à de hautes températures, par exemple lorsque l'élément de garniture est une tablette arrière de véhicule automobile.

L'utilisation de fibres de liaison à âme en PET est ainsi particulièrement avantageuse, que ces âmes de PET, après fusion du coPET, restent enchevêtrées avec les premières fibres 22 et les secondes fibres 26 qui ont été insérées dans la première couche par aiguilletage. En outre, ces âmes de PET restent parfaitement noyées dans le coPET, puisque celui-ci était autour de ces âmes avant fusion. La tenue mécanique de l'élément obtenu est donc meilleure que dans le cas où les fibres de liaison sont intégralement formées de coPET.

Cette étape de chauffage est de préférence réalisée par passage d'air chaud à travers la nappe et la seconde couche. En variante, cette étape de chauffage est réalisée par contact avec des plateaux chauds, la chaleur se transmettant dans ce cas par conduction.

L'ensemble peut ensuite être rapporté dans un moule chauffant, afin de thermoformer l'élément. De préférence, le moule chauffant est régulé à basse température.

Le procédé de fabrication comporte ensuite une sixième étape de refroidissement, au cours de laquelle le coPET refroidit et durcit donc. Le coPET forme ainsi un liant pour les premières fibres 22, les âmes de PET (qui seront par la suite considérée comme faisant partir des premières fibres), et, conformément à l'invention, pour les secondes fibres 26 qui ont été insérées dans la première couche par aiguilletage.

La solidarisation entre les première et seconde couche est donc assurée par ces secondes fibres 26 liées aux premières fibres 22 par le liant 24.

Il apparait ainsi que, conformément à l'invention, la solidarisation entre les première et seconde couches est réalisée simultanément à la réalisation de la structure formée par la première couche. Cette solidarisation en outre ne nécessite pas d'apport de colle ou d'une autre substance de liaison.

On notera que, puisque la seconde couche ne comporte pas de liant, il présente après refroidissement un meilleur aspect et un meilleur toucher que la première couche. La seconde couche reste toutefois résistante à l'abrasion, du fait de son aiguilletage au cours de la quatrième étape d'aiguilletage.

On notera que, dans le cas du second mode de réalisation, le renfort 28 est intégré à la première couche 16 lors de la réalisation de la nappe destinée à former cette première couche.

Par ailleurs, dans le cas du troisième mode de réalisation, la troisième couche 30 est collée à la première surface 12 suite à l'étape de refroidissement. Une autre couche de fibres de PET liées par un liant coPET peut ensuite également être collée sur cette troisième couche 30.

Il apparait qu'un élément de garniture 10 selon l'invention présente des propriétés mécaniques suffisantes pour les applications habituelles.

## Revendications

1. Elément (10) de garniture de véhicule, notamment de véhicule automobile, comprenant :
- une première couche structurelle (16) formée d'un mélange de premières fibres (22) de Polytéréphtalate d'éthylène liées entre elles par un liant (24) en copolymère de polyéthylène, et
- une seconde couche (18) de parement intégralement formée de secondes fibres (26) de Polytéréphtalate d'éthylène,
- une partie des secondes fibres (26) de la seconde couche (18) s'étendant dans la première couche (16) et étant liées avec les premières fibres de la première couche par le liant en copolymère de polyéthylène.

2. Elément de garniture (10) selon la revendication 1, comprenant un renfort (28) noyé dans la première couche (16), le renfort étant choisi parmi :
- des fibres continues de Polytéréphtalate d'éthylène, liées entre elles par un liant (24) en copolymère de polyéthylène,
- des fibres continues de Polytéréphtalate d'éthylène, liées entre elles sans liant,
- un film de Polytéréphtalate d'éthylène.

3. Elément de garniture (10) selon la revendication 1 ou 2, comprenant une troisième couche (30), par exemple une mousse de Polytéréphtalate d'éthylène, solidarisée à la première couche (12), par exemple par collage.

4. Elément de garniture (10) selon l'une quelconque des revendications précédentes, formant une tablette de plage arrière de véhicule automobile.

5. Elément de garniture (10) selon l'une quelconque des revendications précédentes, dans lequel les secondes fibres (26) sont liées entre elles par aiguilletage.

6. Procédé de fabrication de l'élément de garniture (10) selon l'une quelconque des revendications précédentes, comprenant :
- la fourniture d'une nappe destinée à former la première couche, la nappe étant formée d'un mélange de premières fibres (22) de Polytéréphtalate d'éthylène et de fibres de liaison au moins partiellement en copolymère de polyéthylène,
- la fourniture de la seconde couche (18) formée des secondes fibres (26) pré-aiguilletées,
- la superposition de la nappe avec la seconde couche (18),
- l'aiguilletage de la nappe et de la seconde couche (18) ensemble, l'aiguilletage étant réalisé à travers la seconde couche (18), de la seconde couche (18) vers la nappe, avec une profondeur d'aiguilletage supérieure à l'épaisseur de la seconde couche (18), de sorte qu'une partie des secondes fibres pénètre la nappe,
- le chauffage de la nappe et de la seconde couche (18) jusqu'à au moins la température de fusion du copolymère de polyéthylène,
- le refroidissement au cours duquel le copolymère de polyéthylène refroidit et durcit, formant un liant pour les premières fibres (22) et pour la partie des secondes fibres (26) qui ont pénétré la nappe.

7. Procédé de fabrication selon la revendication 6, dans lequel les fibres de liaison sont chacune formée d'une âme de Polytéréphtalate d'éthylène entourée d'une gaine de copolymère de polyéthylène.

8. Procédé de fabrication selon la revendication 6 ou 7, dans lequel la nappe est formée d'un mélange comportant entre 30 et 60% en masse de fibres de liaison et entre 40 et 70% en masse de premières fibres (22).

9. Procédé de fabrication selon l'une quelconque des revendications 6 à 8, dans lequel le chauffage est réalisé par soufflage d'un air chaud à travers la nappe et la seconde couche (18).

10. Procédé de fabrication selon l'une quelconque des revendications 6 à 9, dans lequel un renfort (28) est intégré dans la nappe lors de la fourniture de cette nappe.

## Patentansprüche

1. Fahrzeugverkleidungselement (10), insbesondere eines Kraftfahrzeugs, umfassend:
- eine erste Strukturschicht (16), die aus einem Gemisch aus ersten Fasern (22) aus Polyethylenterephthalat gebildet ist, die durch ein Bindemittel (24) aus Polyethylencopolymer miteinander verbunden sind, und
- eine zweite Deckschicht (18), die vollständig aus zweiten Fasern (26) aus Polyethylenterephthalat gebildet ist,
- wobei sich ein Teil der zweiten Fasern (26) der zweiten Schicht (18) in die erste Schicht (16) erstreckt und durch das Bindemittel aus Polyethylencopolymer mit den ersten Fasern der
ersten Schicht verbunden ist.

2. Verkleidungselement (10) nach Anspruch 1, umfassend eine Verstärkung (28), die in die erste Schicht (16) eingebettet ist, wobei die Verstärkung ausgewählt ist aus:
- Endlosfasern aus Polyethylenterephthalat, die durch ein Bindemittel (24) aus Polyethylencopolymer miteinander verbunden sind,
- Endlosfasern aus Polyethylenterephthalat, die ohne Bindemittel miteinander verbunden sind,
- einem Film aus Polyethylenterephthalat.

3. Verkleidungselement (10) nach Anspruch 1 oder 2, umfassend eine dritte Schicht (30), beispielsweise Polyethylenterephthalat-Schaum, die fest mit der ersten Schicht (12) verbunden ist, beispielsweise durch Kleben.

4. Verkleidungselement (10) nach einem der vorherigen Ansprüche, das eine hintere Ablageschale eines Kraftfahrzeugs bildet.

5. Verkleidungselement (10) nach einem der vorherigen Ansprüche, wobei die zweiten Fasern (26) durch Vernadeln miteinander verbunden sind.

6. Herstellungsverfahren des Verkleidungselements (10) nach einem der vorherigen Ansprüche, umfassend:
- Bereitstellen einer Matte, die dazu bestimmt ist, die erste Schicht zu bilden, wobei die Matte aus einem Gemisch aus ersten Fasern (22) aus Polyethylenterephthalat und Bindefasern zumindest teilweise aus Polyethylencopolymer gebildet ist,
- Bereitstellen der zweiten Schicht (18), die aus den zweiten vorvernadelten Fasern (26) gebildet ist,
- Überlagern der Matte mit der zweiten Schicht (18),
- Vernadeln der Matte und der zweiten Schicht (18) miteinander, wobei das Vernadeln durch die zweite Schicht (18) von der zweiten Schicht (18) zu der Matte mit einer Vernadelungstiefe erfolgt, die größer ist als die Stärke der zweiten Schicht (18) ist, sodass ein Teil der zweiten Fasern die Matte durchdringt,
- Erhitzen der Matte und der zweiten Schicht (18) auf mindestens die Schmelztemperatur des Polyethylencopolymers,
- Abkühlen, bei dem das Polyethylencopolymer abkühlt und aushärtet, wobei es ein Bindemittel für die ersten Fasern (22) und für den Teil der zweiten Fasern (26) bildet, die in die Matte eingedrungen sind.

7. Herstellungsverfahren nach Anspruch 6, wobei die Verbindungsfasern jeweils aus einem Kern aus Polyethylenterephthalat gebildet sind, der von einem Mantel aus Polyethylencopolymer umgeben ist.

8. Herstellungsverfahren nach Anspruch 6 oder 7, wobei die Matte aus einem Gemisch gebildet ist, das zwischen 30 und 60 Masse-% Bindefasern und zwischen 40 und 70 Masse-% erste Fasern (22) aufweist.

9. Herstellungsverfahren nach einem der Ansprüche 6 bis 8, wobei das Erhitzen durch Blasen von heißer Luft durch die Matte und die zweite Schicht (18) erfolgt.

10. Herstellungsverfahren nach einem der Ansprüche 6 bis 9, wobei bei dem Bereitstellen der Bahn eine Verstärkung (28) in die Bahn integriert wird.

## Claims

1. A trim element (10) for a vehicle; in particular an automotive vehicle, comprising:
- a first structural layer (16) formed of a mixture of first polyethylene terephthalate fibres (22) bound together by a binder (24) in polyethylene copolymer, and
- a second facing layer (18) entirely formed of second polyethylene terephthalate fibres (26),
- a portion of the second fibres (26) of the second layer (18) extending into the first layer (16) and being bound with the first fibres of the
first layer by the binder in polyethylene copolymer.

2. The trim element (10) according to claim 1, comprising a reinforcement (28) embedded in the first layer (16), the reinforcement being chosen from among:
- continuous fibres of polyethylene terephthalate bound together by a binder (24) in polyethylene copolymer,
- continuous fibres of polyethylene terephthalate bound together without binder,
- a film of polyethylene terephthalate.

3. The trim element (10) according to claim 1 or 2, comprising a third layer (30), for example a polyethylene terephthalate foam secured onto the first layer (12) for example by bonding.

4. The trim element (10) according to any of the preceding claims, forming a rear window shelf of an automotive vehicle.

5. The trim element (10) according to any of the preceding claims, wherein the second fibres (26) are bound together by needle punching.

6. A method for manufacturing the trim element (10) according to any of the preceding claims, comprising:
- providing a web intended to form the first layer, the web being formed of a mixture of first polyethylene terephthalate fibres (22) and binding fibres at least partially in polyethylene copolymer,
- providing the second layer (18) formed of the second pre-needle punched fibres (26),
- superimposing the second layer (18) over the web,
- needle punching the web and second layer (18) together, needle punching being performed through the second layer (18), from the second layer (18) towards the web, with a needle-punching depth greater than the thickness of the second layer (18) so that a portion of the second fibres penetrates the web,
- heating the web and second layer (18) at least up until the melt temperature of the polyethylene copolymer.
- cooling, whereby the polyethylene copolymer cools and hardens forming a binder for the first fibres (22) and for the portion of second fibres (26) having penetrated the web.

7. The manufacturing method according to claim 6, wherein the binding fibres are each formed of a core in polyethylene terephthalate surrounded by a sheath of polyethylene copolymer.

8. The manufacturing method according to claim 6 or 7, wherein the web is formed of a mixture comprising between 30 and 60 % by weight of binding fibres and between 40 and 70 % by weight of first fibres (22).

9. The manufacturing method according to any of claims 6 to 8, wherein heating is performed by blowing hot air through the web and the second layer (18).

10. The manufacturing method according to any of claims 6 to 9, wherein a reinforcement (28) is integrated in the web when providing said web.
